# EUROPEAN PATENT SPECIFICATION

(11) **EP 2 726 286 B1**
(45) Date of publication and mention of the grant of the patent: **11.09.2019**
(21) Application number: 12731846.7
(22) Date of filing: 20.06.2012
(51) Int. Cl.: B32B 38/08, B32B 43/00, B65B 33/00, B32B 17/06

(54) **METHOD OF MAKING HEAT TREATED COATED ARTICLE USING DIAMOND-LIKE CARBON (DLC) COATING AND PROTECTIVE FILM ON ACID-ETCHED SURFACE**
VERFAHREN ZUR HERSTELLUNG EINES HITZEBEHANDELTEN BESCHICHTETEN ARTIKELS MIT EINER SCHUTZBESCHICHTUNG AUS DIAMANTKOHLENSTOFF
PROCÉDÉ DE FABRICATION D'UN ARTICLE REVÊTU TRAITÉ THERMIQUEMENT AU MOYEN D'UN REVÊTEMENT DU TYPE DÉPÔT CDA ET D'UN FILM PROTECTEUR DÉPOSÉS SUR UNE SURFACE GRAVÉE À L'ACIDE

(30) Priority: 30.06.2011 US 201113174336
(43) Date of publication of application: 07.05.2014
(73) Proprietor: Guardian Glass, LLC, Auburn Hills MI 48326 (US)
(72) Inventor: WANG, Jiangping, Novi, MI 48377 (US); PETRMICHL, Rudolph, H., Ann Arbor, MI 48108 (US)
(74) Representative: Hoyng Rokh Monegier LLP
(86) International application number: PCT/US2012/043203
(87) International publication number: WO 2013/003130

(56) References cited:
- WO-A1-95/13189
- WO-A1-2008/143756
- WO-A1-2008/147488
- WO-A1-2008/150328
- WO-A1-2009/067133
- JP-A- 2002 211 954
- US-A- 5 888 593
- US-A1- 2003 064 198
- US-A1- 2003 113 551
- US-A1- 2005 191 494
- US-A1- 2008 182 123
- US-A1- 2009 123 654

## Description

This invention relates to a method of making a heat treated (HT) coated article to be used in shower door applications, window applications, tabletop applications, or any other suitable application. For example, certain embodiments of this invention relate to a method of making a coated article including a step of heat treating a glass substrate coated with at least a layer comprising diamond-like carbon (DLC) and an overlying protective film thereon. The protective film consists of or includes both (a) an oxygen blocking or barrier layer, and (b) a release layer. Following and/or during heat treatment (e.g., thermal tempering, or the like) the protective film may be entirely or partially removed.

### BACKGROUND AND SUMMARY OF EXAMPLE EMBODIMENTS OF THE INVENTION

Coated articles such as transparent shower doors and IG window units are often heat treated (HT), such as being thermally tempered, for safety and/or strengthening purposes. For example, coated glass substrates for use in shower door and/or window units are often heat treated at a high temperature(s) (e.g., at least about 580 degrees C, more typically from about 600-650 degrees C) for purposes of tempering.

Diamond-like carbon (DLC) is sometimes known for its scratch resistant properties. For example, different types of DLC are discussed in the following U.S. Patent Nos. 6,303,226; 6,303,225; 6,261,693; 6,338,901; 6,312,808; 6,280,834; 6,284,377; 6,335,086; 5,858,477; 5,635,245; 5,888,593; 5,135,808; 5,900,342; and 5,470,661.

It would sometimes be desirable to provide a window unit or other glass article with a protective coating including DLC in order to protect it from scratches and the like. Unfortunately, DLC tends to oxidize and burn off at temperatures of from approximately 380 to 400 degrees C, as the heat treatment is typically conducted in an atmosphere including oxygen. Thus, it will be appreciated that DLC as a protective overcoat cannot withstand heat treatments (HT) at the extremely high temperatures described above which are often required in the manufacture of vehicle windows, IG window units, glass table tops, and/or the like.

Accordingly, those skilled in the art will appreciate that a need in the art exists for a method of providing heat treated (HT) coated articles with a protective coating (one or more layers) comprising DLC. A need for corresponding coated articles, both heat treated and pre-HT, also exists.

Certain example embodiments of this invention relate to a method of making a heat treated (HT) coated article to be used in shower door applications, window applications, tabletop applications, or any other suitable application. This invention relates to a method of making a coated article including a step of heat treating a glass substrate coated with at least a layer comprising diamond-like carbon (DLC) and an overlying protective film thereon.
The protective film consists of or includes both (a) an oxygen blocking or barrier layer, and (b) a release layer. Following and/or during heat treatment (e.g., thermal tempering, or the like), the protective film may be entirely or partially removed. Other embodiments of this invention relate to the pre-HT coated article, or the post-HT coated article.

An example advantage of using distinct and different oxygen-blocking and release layers in the protective film is that each layer of the protective film can be optimized for its intended function. Consequently, the optimized performance of the protective film may be improved and it can be made thinner if desired.

In certain example embodiments of this invention, there is provided a method of making a heat treated coated article, the method comprising: providing a glass substrate; forming at least one layer comprising diamond-like carbon (DLC) on the glass substrate; forming a protective film on the glass substrate over at least the layer comprising DLC, the protective film include a release layer and an oxygen barrier layer, the release layer and the oxygen barrier layer being of different material and/or different stoichiometry relative to each other; heat treating the glass substrate with the layer comprising DLC and the protective film thereon so that during the heat treating the protective film prevents significant burnoff of the layer comprising DLC, wherein the heat treating comprises heating the glass substrate to temperature(s) sufficient for thermal tempering, heat strengthening, and/or heat bending; and exposing the protective film to a release liquid and removing at least part of the protective film during and/or after said heat treating.

In certain example embodiments of this invention, there is provided a method of making a heat treated coated article, the method comprising: heat treating a coated glass substrate, the coated glass substrate comprising, prior to the heat treating, a glass substrate, a layer comprising diamond-like carbon (DLC) on the glass substrate, and a protective film on the glass substrate over at least the layer comprising DLC, wherein the protective film includes a release layer and an oxygen barrier layer and the release layer and the oxygen barrier layer are of different material and/or different stoichiometry relative to each other; during said heat treating of the coated glass substrate with the layer comprising DLC and the protective film thereon, the protective film prevents significant burnoff of the layer comprising DLC, and wherein the heat treating comprises heating the glass substrate to temperature(s) sufficient for thermal tempering, heat strengthening, and/or heat bending; and exposing the protective film to a release liquid and removing at least part of the protective film during and/or after said heat treating.

In certain comparative, non-inventive example embodiments, there is provided a method of making a coated article, the method comprising: providing a glass substrate including first and second major surfaces, the first major surface being exposed to a tin bath during fabrication of the glass substrate and the second major surface being opposite the first major surface and being acid etched; ion beam treating the first major surface of the substrate so as to remove a surface portion of the substrate, the surface portion comprising tin, tin oxide, and/or surface contaminants; disposing a zirconium-inclusive layer on the first major surface following said ion beam treating; and disposing a layer comprising diamond-like carbon (DLC), directly or indirectly, on the zirconium-inclusive layer. The glass substrate with the zirconium-inclusive layer and the layer comprising DLC is heat treatable at a temperature sufficient for thermal tempering, heat strengthening, and/or heat bending so as to cause burnoff of the layer comprising DLC but without also causing significant burnoff of the zirconium-inclusive layer.

In certain comparative, non-inventive example embodiments, there is provided a method of making a heat treated coated article, the method comprising: providing a glass substrate including first and second major surfaces, with the first major surface having been exposed to a tin bath during fabrication of the glass substrate and having been ion beam treated so as to remove a surface portion thereof comprising tin, tin oxide, and/or surface contaminants, with the second major surface being opposite the first major surface and having been acid etched, and with the first major surface supporting, in order moving away from the substrate, a zirconium-inclusive layer and a layer comprising diamond-like carbon (DLC); and heat treating the glass substrate with the zirconium-inclusive layer and the layer comprising DLC thereon, so as to remove the layer comprising DLC and cause at least a portion of the zirconium-inclusive layer to be exposed as an outermost layer of the heat treated coated article.

In certain comparative, non-inventive example embodiments, there is provided a heat treatable coated article, comprising: a glass substrate having first and second major surfaces, with the first major surface being a tin side of the substrate and being ion-beam etched or milled so as to remove tin, tin oxide, and/or surface contaminants from a surface portion thereof, the second major surface being acid etched. The first major surface at least temporarily supports, in order moving away from the substrate: a layer comprising zirconium nitride, and a layer comprising diamond-like carbon (DLC). The glass substrate is heat treatable so as to (a) cause removal of the layer comprising DLC, and (b) convert the layer comprising zirconium nitride to a layer comprising zirconium oxide. The ion-beam etched or milled first major surface causes haze to be lower following treatment than it otherwise would be if the first major surface were not ion-beam etched or milled.

In certain example comparative, non-inventive embodiments, there is provided a heat treated coated article, comprising: a glass substrate having first and second major surfaces, with the first major surface being a tin side of the substrate and being ion-beam etched or milled so as to remove tin, tin oxide, and/or surface contaminants from a surface portion thereof, and with the second major surface being acid etched. The first major surface supports, in
order moving away from the substrate, a layer comprising zirconium nitride and a layer comprising diamond-like carbon (DLC). The ion-beam etched or milled first major surface causes haze to be lower following treatment than it otherwise would be if the first major surface were not ion-beam etched or milled.

In certain comparative, non-inventive example embodiments, there is provided a method of making a coated article, the method comprising: providing a glass substrate including first and second major surfaces, the first major surface being exposed to a tin bath during fabrication of the glass substrate and the second major surface being opposite the first major surface and being acid etched; ion beam treating the first major surface of the substrate so as to remove a surface portion of the substrate, the surface portion comprising tin, tin oxide, and/or surface contaminants; disposing a layer comprising diamond-like carbon (DLC) on the first major surface following said ion beam treating; and disposing a protective film on the glass substrate over at least the layer comprising DLC, the protective film including at least release and oxygen barrier layers, the release and oxygen barrier layers being different materials and/or having different stoichiometries compared to one another. The glass substrate with the layer comprising DLC and the protective film thereon is heat treatable at a temperature sufficient for thermal tempering, heat strengthening, and/or heat bending so as to cause the removal of the protective film without causing significant burnoff of the layer comprising DLC.

In certain comparative, non-inventive example embodiments, there is provided a method of making a coated article, the method comprising: providing a glass substrate including first and second major surfaces, the first major surface having been exposed to a tin bath during fabrication of the glass substrate and having been ion beam treated so as to remove a surface portion thereof comprising tin, tin oxide, and/or surface contaminants, the second major surface being opposite the first major surface and having been acid etched with a soft or hard acid etchant, the first major surface supporting, in order moving away from the substrate, a layer comprising diamond-like carbon (DLC), a release layer, and an oxygen barrier layer; and heat treating the glass substrate with the layer comprising DLC, the release layer, and the oxygen barrier layer thereon, so as to remove the release and oxygen barrier layers and cause at least a portion of the layer comprising DLC to be exposed as an outermost layer of the heat treated coated article.

In certain comparative, non-inventive example embodiments, there is provided a heat treatable coated article, comprising: a glass substrate having first and second major surfaces, the first major surface being a tin side of the substrate and being ion-beam etched or milled so as to remove tin, tin oxide, and/or surface contaminants from a surface portion thereof, the second major surface being acid etched. The first major surface at least temporarily supports, in order moving away from the substrate: a layer comprising diamond-like carbon (DLC); a zinc-inclusive release layer; and a layer comprising aluminum nitride. The glass substrate is heat treatable so as to remove the zinc-inclusive release layer and the layer comprising aluminum nitride, leaving the layer comprising DLC as an outermost layer. The ion-beam etched or milled first major surface causes haze to be lower following treatment than it otherwise would be if the first major surface were not ion-beam etched or milled.

In certain comparative, non-inventive example embodiments, there is provided a heat treated coated article, comprising a glass substrate having first and second major surfaces, the first major surface being a tin side of the substrate and being ion-beam etched or milled so as to remove tin, tin oxide, and/or surface contaminants from a surface portion thereof, the second major surface being acid etched with a soft or hard acid etchant. The first major surface supports a layer comprising diamond-like carbon (DLC). The ion-beam etched or milled first major surface causes haze to be lower following
treatment than it otherwise would be if the first major surface were not ion-beam etched or milled.

In this invention, there is provided a method of making a coated article, the method comprising: providing a glass substrate including first and second major surfaces, the first major surface being acid etched with a soft acid etchant, and the second major surface being opposite the first major surface; disposing a layer comprising diamond-like carbon (DLC) on the first major surface; and disposing a protective film on the glass substrate over at least the layer comprising DLC, the protective film including at least release and oxygen barrier layers, the release and oxygen barrier layers being different materials and/or having different stoichiometries compared to one another. The glass substrate with the layer comprising DLC and the protective film thereon is heat treatable at a temperature sufficient for thermal tempering, heat strengthening, and/or heat bending so as to cause the removal of the protective film without causing significant burn-off of the layer comprising DLC.

In certain example embodiments of this invention, there is provided a method of making a heat treated coated article, the method comprising: providing a glass substrate including first and second major surfaces, the first major surface having been acid etched with a soft acid etchant, the second major surface being opposite the first major surface. The first major surface supports, in order moving away from the substrate: a layer comprising diamond-like carbon (DLC) on the first major surface, and a protective film including at least release and oxygen barrier layers, the release and oxygen barrier layers being different materials and/or having different stoichiometries compared to one another. The glass substrate with the layer comprising DLC and the protective film thereon is heat treated, so as to remove the release and oxygen barrier layers and cause at least a portion of the layer
comprising DLC to be exposed as an outermost layer of the heat treated coated article.

The above described method may lead to a heat treatable coated article, comprising: a glass substrate having first and second major surfaces, the first major surface being acid etched with two passes of a soft acid etchant. The first major surface at least temporarily supports, in order moving away from the substrate: a layer comprising silicon; a layer comprising diamond-like carbon (DLC); a zinc-inclusive release layer; and a layer comprising aluminum nitride. The glass substrate is heat treatable so as to cause removal of the zinc-inclusive release layer and the layer comprising aluminum nitride, leaving the layer comprising DLC as an outermost layer. The coated article has a scratch resistance higher than it otherwise would be if the first major surface were etched with a hard acid etchant.

### BRIEF DESCRIPTION OF THE DRAWINGS

FIGURE 1 is a schematic cross sectional view of a coated article, prior to and following heat treatment.
FIGURE 2 is a schematic cross sectional view of a coated article, prior to and following heat treatment.
FIGURE 3 is a schematic cross sectional view of a coated article, prior to and following heat treatment.
FIGURE 4 is a schematic cross sectional view of a coated article, prior to and following heat treatment
FIGURE 5 is a schematic cross sectional view of a coated article, prior to and following heat treatment.
FIGURE 6 is a schematic cross sectional view of a coated article, prior to and following heat treatment.
FIGURE 7 is a schematic cross sectional view of a coated article, prior to and following heat treatment.
FIGURE 8 is a schematic cross sectional view of a coated article, prior to and following heat treatment.
FIGURE 9 is a schematic cross sectional view of a coated article having a silky smooth appearance, prior to and following heat treatment.
FIGURE 10 is a schematic view of an ion beam being used to "recondition" a substrate having a silky smooth appearance.
FIGURE 11 is a schematic cross sectional view of a coated article having a silky smooth appearance and low post-heat treatment haze.
FIGURE 12 is a schematic cross sectional view of another coated article having a silky smooth appearance and low post-heat treatment haze.
FIGURE 13 compares coated articles that have been ion beam etched (left) with coated articles that have not been ion beam etched (right).
FIGURE 14 is a schematic cross sectional view of a coated article having a silky smooth appearance and improved scratch resistance.
FIGURE 15 is a schematic cross sectional view of a heat treatable coated article having a silky smooth appearance and improved scratch resistance according to this invention.

### DETAILED DESCRIPTION OF EXAMPLE EMBODIMENTS OF THE INVENTION

Referring now more particularly to the accompanying drawings in which like reference numerals indicate like parts throughout the several views.

This invention relates to methods of making coated articles that may use heat treatment (HT), wherein the coated article includes a coating (one or more layers) including diamond-like carbon (DLC). In certain instances, the HT may involve heating a supporting glass substrate, with the DLC thereon, to temperature(s) of from 550 to 800 degrees C, more preferably from 580 to 800 degrees C (which is well above the burn-off temperature of DLC). In particular, certain example embodiments of this invention relate to a technique for allowing the DLC to withstand such HT without significantly burning off during the same. In certain embodiments, a sacrificial protective film is formed on the glass substrate over the DLC so as to reduce the likelihood of the DLC burning off during HT. Thus, the majority (if not all) of the DLC remains on the glass substrate, and does not burn off, during the HT. Following HT, the sacrificial protective film (which may include one or more layers) may or may not be removed in different embodiments of this invention.

The sacrificial protective film consists of or includes both (a) an oxygen blocking or barrier layer, and (b) a
release layer. An example advantage of using distinct and different oxygen-blocking and release layers in film 17 is that each layer (17a and 17b) can be optimized for its intended function. Consequently, the optimized performance of the sacrificial film 17 may be improved and it can be made thinner if desired. In certain example embodiments, following HT the DLC inclusive layer protects against abrasion and corrosion, and against adhesion of minerals in hard water (e.g., has good hard water cleanability).

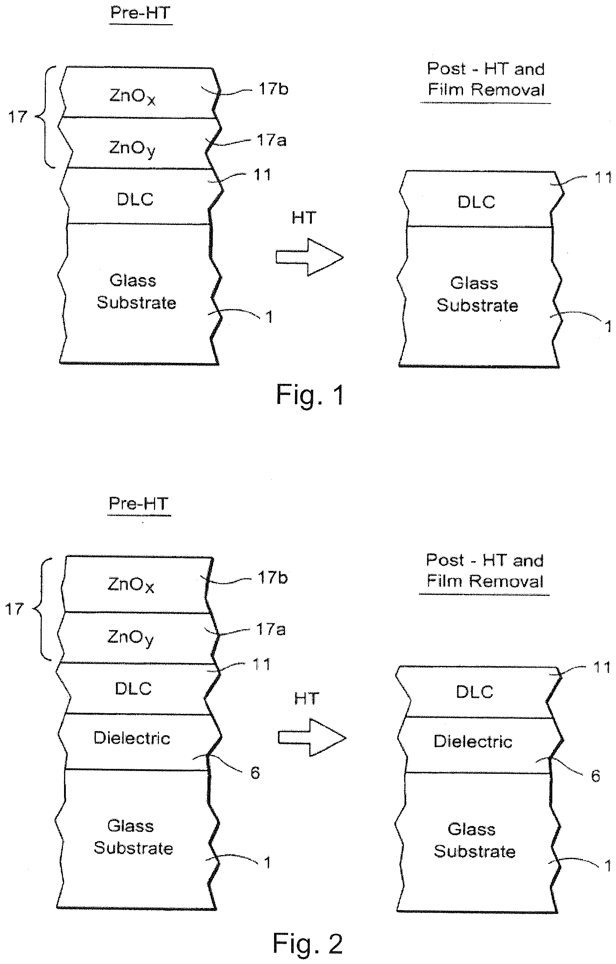

Fig. 1 is a schematic cross sectional view of a coated article, before and after heat treatment, according to an example embodiment of this invention. Typically, the coated article on the left side of Fig. 1 exists during a stage of manufacture prior to heat treatment (HT), but may also exist post-HT in certain instances. The coated article shown in Fig. 1 includes glass substrate 1, DLC inclusive layer 11, and sacrificial protective film 17 which includes two or more layers. The protective film 17 includes first and second layers 17a and 17b which may be of the same or different material(s).

Glass substrate 1 is typically of or includes soda-lime-silica glass, although other types of glass may be used in certain instances.

DLC inclusive layer 11 may be from about 5 to 1,000 angstroms (Å) thick in certain example embodiments of this invention, more preferably from 10-300 Å thick, and most preferably from 20 to 65 Å thick, possibly from about 25-50 Ǻ thick, with an example thickness being about 30 angstroms. In certain example embodiments of this invention, DLC layer 11 may have an average hardness of at least about 10 GPa, more preferably at least about 20 GPa, and most preferably from about 20-90 GPa. Such hardness renders layer(s) 11 resistant to scratching, certain solvents, and/or the like. Layer 11 may, in certain example embodiments, be of or include a special type of DLC known as highly tetrahedral amorphous carbon (t-aC), and may be hydrogenated (t-aC:H) in certain embodiments. In certain hydrogenated embodiments, the t-aC type or any other suitable type of DLC may include from 1 to 30% hydrogen, more preferably from 5-20% H, and most preferably from 10-20% H. This t-aC type of DLC includes more sp³ carbon - carbon (C - - C) bonds than sp² carbon - carbon (C - - C) bonds. In certain example embodiments, at least about 30% or 50% of the carbon-carbon bonds in DLC layer 11 may be sp³ carbon - carbon (C - - C) bonds, more preferably at least about 60% of the carbon-carbon bonds in the layer 11 may be sp³ carbon - carbon (C - - C) bonds, and most preferably at least about 70% of the carbon-carbon bonds in the layer 11 may be sp³ carbon - carbon (C - - C) bonds. In certain example embodiments of this invention, the DLC may have an average density of at least about 2.4 gm/cm³, more preferably at least about 2.7 gm/cm³. Example linear ion beam sources that may be used to deposit DLC inclusive layer 11 on substrate 1 include any of those in any of U.S. Patent Nos. 6,261,693, 6,002,208, 6,335,086, or 6,303,225. When using an ion beam source to deposit layer(s) 11, hydrocarbon feedstock gas(es) (e.g., C₂H₂), HMDSO, or any other suitable gas, may be used in the ion beam source in order to cause the source to emit an ion beam toward substrate 1 for forming layer(s) 11. It is noted that the hardness and/or density of layer(s) 11 may be adjusted by varying the ion energy of the depositing apparatus.

DLC layer 11 allows the coated article to be more scratch resistant than if the DLC 11 were not provided. It is noted that while layer 11 is on glass substrate 1 in certain embodiments of this invention, additional layer(s) may or may not be under layer 11 between the substrate 1 and layer 11 in certain example embodiments of this invention. Thus, the phrase "on the substrate" as used herein is not limited to being in direct contact with the substrate as other layer(s) may still be provided therebetween.

For example and without limitation, the layer 11 of or including DLC may be any of the DLC inclusive layers of any of U.S. Patent Nos. 6,592,993; 6,592,992; 6,531,182; 6,461,731; 6,447,891; 6,303,226; 6,303,225; 6,261,693; 6,338,901; 6,312,808; 6,280,834; 6,284,377; 6,335,086; 5,858,477; 5,635,245; 5,888,593; 5,135,808; 5,900,342; or 5,470,661, or alternatively may be any other suitable type of DLC inclusive layer. DLC inclusive layer 11 may be hydrophobic (high contact angle), hydrophilic (low contact angle), or neither, in different embodiments of this invention. The DLC 11 may or may not include from about 5-30% Si, more preferably from about 5-25% Si, and possibly from about 10-20% Si in certain example embodiments of this invention. Hydrogen may also be provided in the DLC in certain instances.

Sacrificial protective film 17 is provided in order to protect DLC layer 11 during HT. If film 17 were not provided, the DLC 11 would significantly oxidize during HT and burn off, thereby rendering the final product defenseless against scratching. However, the presence of sacrificial protective film 17 prevents or reduces the amount of oxygen which can reach the DLC 11 during HT from the surrounding atmosphere, thereby preventing the DLC from significantly oxidizing during HT. As a result, after HT, the DLC inclusive layer 11 remains on the glass substrate 1 in order to provide scratch resistance and/or the like. The protective film 17 includes both an oxygen blocking or barrier layer 17b, and a release layer 17a.

It has been found that the use of zinc and/or zinc oxide in a sacrificial protective film 17 is/are especially beneficial with respect to reducing and/or preventing oxygen diffusion into the DLC during HT. In the Fig. 1 comparative, non-inventive example embodiment, the protective film 17 includes a first zinc inclusive layer 17a and a second zinc oxide inclusive layer 17b. The first zinc inclusive layer 17a may be metallic, substantially metallic, or substoichiometric zinc oxide in different example embodiments; whereas the second zinc oxide inclusive layer 17b may be of or
including zinc oxide in certain example embodiments. In certain example embodiments, layer 17a is more metallic than layer 17b. In other words, layer 17b contains more oxygen than does layer 17a. Thus, layer 17a is able to function as a release layer whereas layer 17b is able to function as an oxygen blocking or barrier layer. An oxygen "blocking" or "barrier" layer means that the layer blocks significant amounts of oxygen from reaching the DLC during HT.

In certain example embodiments of this invention, layer 17a may be of or include ZnO_{y} and layer 17b may be of or include ZnOₓ, where x>y (i.e., layer 17b contains more oxygen than layer 17a). Moreover, in certain example embodiments of this invention, y is from about 0 to 0.9, more preferably from about 0.1 to 0.9, even more preferably from about 0.1 to 0.8, and possibly from about 0.1 to 0.7. Meanwhile, in certain example embodiments of this invention, x is greater than y, and x is from about 0.3 to 1.0, more preferably from about 0.3 to 0.99, even more preferably from about 0.5 to 0.95, and possibly from about 0.6 to 0.90. Thus, it will be appreciated that in certain example instances, both layers 17a and 17b may be of or include zinc oxide, and both layers 17a and 17b may be substoichiometric.

Advantageously, it has been found that the use of zinc oxide layer 17a that is more metallic than zinc oxide layer 17b surprisingly permits more efficient and easier removal of the protective film 17 during and/or following heat treatment (HT). In other words, layer 17a is a release layer. The different compositions of zinc oxide inclusive layers 17a and 17b is used to cause different stresses in layers 17a and 17b, which stresses are manipulated so as to allow the film 17 to be more easily removed during and/or following HT. In particular, more metallic zinc oxide based layer 17a may be considered a release layer for allowing the film 17 to be easily removed from the DLC or substrate during and/or after HT due to its reduced or no oxygen content, whereas the less metallic (and more oxided) zinc oxide based layer 17b may be considered an oxygen blocking or barrier layer that reduces or prevents the DLC from burning off and/or oxidizing during HT. Note also that any gettering layer may be considered an oxygen barrier layer in certain example instances. In certain example instances, the more oxidic layer 17b may be considered a blocking/protection layer, for protecting the softer less oxidic getting/barrier layer 17a during heat treatment and otherwise. Zinc oxide is a highly advantageous material for film 17 because it can be easily removed (e.g., using water and/or vinegar) during and/or following HT in a non-toxic manner.

As noted above, one or both of layers 17a and 17b when of or including zinc and/or zinc oxide may be substoichiometric. This is advantageous for oxygen gettering purposes during HT. If the zinc oxide of the entire film 17 is too oxided (i.e., fully stoichiometric) prior to HT, then oxygen can diffuse through the zinc oxide. However, the substoichiometric nature of layer(s) 17a and/or 17b permits the zinc therein to getter oxygen during HT, so that at least layer 17a (and possibly layer 17b) does not burn off during HT. It is noted that upper zinc oxide based layer 17b may or may not burn off (entirely or partially) during HT in different example embodiments of this invention. It is noted that another example advantage of substoichiometric zinc oxide (compared to fully stoichiometric zinc oxide) is that it can be deposited (e.g., via sputtering or the like) more quickly. One or both of layers 17a, 17b may be sputter-deposited in a substoichiometric form, in any suitable manner; e.g., by varying oxygen gas flow in the sputtering chamber(s). For example, as one non-limiting example, layer 17a may be sputter-deposited using 10 ml/kW (regarding content of oxygen gas flow), whereas layer 17b may be sputter-deposited using 12 ml/kW (with remainder of the gas being Ar or the like) in example instances.

Note that one or both of zinc oxide layers 17a and 17b may be doped with other materials such as Al, N, Zr, Ni, Fe, Cr, Ti, Mg, mixtures thereof, or the like, in certain example embodiments of this invention.

In certain example embodiments of this invention, release layer 17a (e.g., of zinc or substoichiometric zinc oxide) may be deposited (e.g., via sputtering) so as to be from about 5 to 2000 nm (50-20,000 Ǻ) thick, more preferably from about 5 to 300 nm (50-3,000 Ǻ) thick, even more preferably from about 10 to 100 nm (100-1,000 Ǻ) thick, with an example thickness being from about 10 to 30 nm (100-300 Ǻ). In certain embodiments, zinc oxide inclusive layer 17b may be deposited (e.g., via sputtering) so as to be from about 20 to 1000 nm (200-10,000 Ǻ) thick, more preferably from about 50 to 500 nm (500-5,000 Ǻ) thick, more preferably from about 100 to 300 nm (1,000-3,000 Ǻ) thick, with an example thickness being about 200 nm (2,000 Ǻ). More metallic layer 17a may be thicker than less metallic layer 17b in certain example embodiments of this invention; layer 17a may be at least twice as thick as layer 17b in certain example instances prior to HT. A preferred thickness of overall sacrificial film 17 in certain example embodiments is less than about 1000 nm (10,000 Ǻ), more preferably less than about 300 nm (3,000 Ǻ), and most preferably less than about 100 nm (1,000 Ǻ).

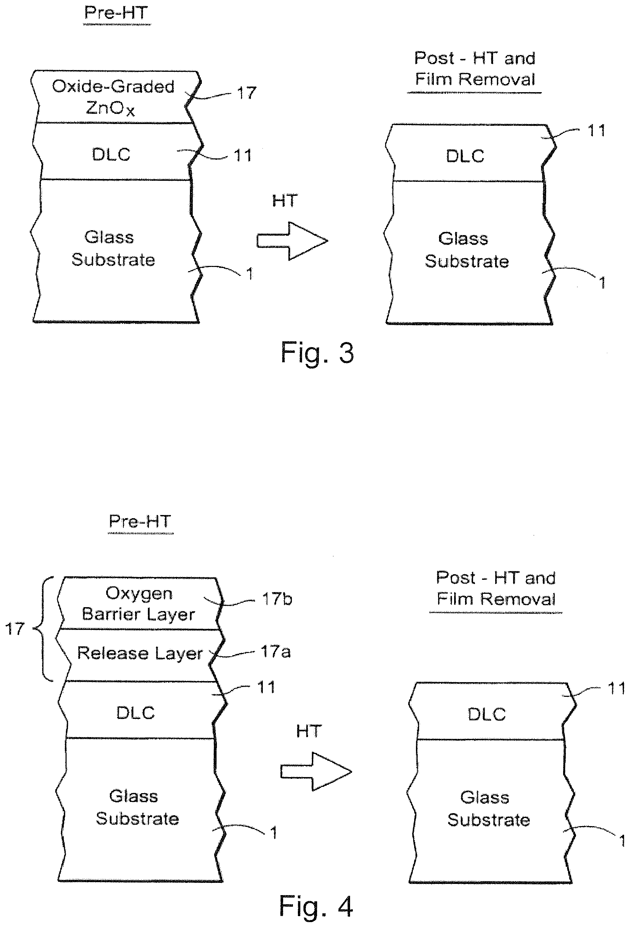

Fig. 2 illustrates another comparative, non-inventive example embodiment. The Fig. 2 embodiment is the same as the Fig. 1 embodiment discussed above, except that in the Fig. 2 embodiment a barrier layer 6 is provided between the glass substrate 1 and the DLC inclusive layer 11. Barrier layer 6 may be a dielectric in certain example embodiments of this invention. Optional barrier layer 6 is for preventing or reducing oxygen and/or sodium (Na) from migrating from the glass 1 into the DLC 11 during HT. In this respect, such an optional barrier layer 6 may improve the overall optical characteristics of the coated article post-HT. Barrier layer 6 may be of or include silicon oxide, silicon nitride, silicon oxynitride, and/or the like, although other barrier materials may also be used. Barrier layer(s) 6 is formed on the glass substrate 1 via sputtering, or via any other suitable technique. Barrier layer 6 may be from about 1 t 100 nm (10 to 1,000 Å) thick in certain example embodiments, more preferably from 5 to 50 nm (50 to 500 Å) thick, and most preferably from 5 to 20 nm (50 to 200 Å) thick. It is noted that a barrier layer(s) 6 may also be provided in other example embodiments of this invention, for instance in any of Figs. 4-7 if desired between the DLC 11 and the glass substrate 1.

Fig. 3 illustrates another comparative, non-inventive example embodiment. The Fig. 3 embodiment is the same as the Fig. 1 embodiment (or even the Fig. 2 embodiment if barrier layer 6 is used, which may be the case in the Fig. 3 embodiment), except that instead of two discrete layers 17a and 17b the protective film 17 is made of one layer that is oxidation graded (continuously or non-continuously) through its thickness. In the Fig. 3 embodiment, the film 17 is provided in a manner so that the film 17 includes more oxygen at a location further from the DLC layer 11 than at another location in the film closer to the DLC layer 11. Note that the film 17 in the Fig. 1-2 embodiments may also be considered oxidation graded because the overall film 17 is more oxided in layer 17b further from the DLC 11 than in layer 17a closer to the DLC 11. However, in the Fig. 3 embodiment, it is also possible for continuous or substantially continuous oxidation grading to occur through the entire or substantially entire film 17 in certain example instances.

An example process of manufacturing a coated article will now be described, with reference to Figs. 1-3. Initially, glass substrate 1 is provided, and at least one barrier layer 6 (e.g., silicon oxide, silicon nitride, silicon oxynitride, or the like) may optionally be sputtered on a surface thereof. Optionally, a multi-layer solar control coating (not shown) may be deposited (e.g., via sputtering) on the surface of the glass substrate 1 opposite the barrier layer 6. At least one layer 11 of or including DLC is deposited (e.g., via ion beam deposition) on the glass substrate 1, over at least the optional barrier layer 6 if present. Then, protective film 17, e.g., including layers 17a and 17b, is deposited on the substrate 1 over the DLC inclusive layer 11. Protective film 17 may be deposited via sputtering, CVD, ion beam deposition, or any other suitable technique. Optionally, a thin protective layer comprising DLC, silicon nitride, aluminum nitride, or silicon aluminum nitride (not shown), may be provided over sacrificial film 17 prior to HT, for durability and/or oxygen barrier purposes.

As shown in Figs. 1-2, the glass substrate 1 with films 6 (optional), 11 and 17 thereon is then heat treated (HT) for purposes of thermal tempering, heat bending, heat strengthening, and/or the like. At least part of this HT may be conducted, for example, in an atmosphere including oxygen as known in the art at temperature(s) of from 550 to 800 degrees C, more preferably from 580 to 800 degrees C (i.e., temperature(s) above the burn-off temperature of DLC). The HT may last for at least one minute, more preferably from 1-10 minutes, in certain example non-limiting embodiments of this invention. During HT, the presence of protective film 17 protects DLC inclusive layer 11 from the HT and prevents layer 11 from significantly oxidizing and/or burning off due to significant oxidation during the HT. While in some instances some of layer 11 may burn off during HT, the majority if not all of DLC inclusive layer 11 remains on the substrate 1 even after the HT due to the presence of protective film 17.

A significant advantage associated with using zinc and/or zinc oxide in film 17 is its ease of removal after HT. Protective layers such as silicon nitride are sometime undesirable since they require complex etching in order to remove the same after HT. On the other hand, it has been found that when film 17 is made of zinc and/or zinc oxide, soluble in vinegar and/or water (possibly only water with no vinegar required in certain preferred embodiments), the application of vinegar and/or water allows portions of film 17 remaining after HT to be easily removed in a non-toxic manner. Again, in certain example embodiments, it is possible to remove the zinc oxide with only water (no vinegar needed) in certain instances, which is advantageous from a cost and processing point of view. In certain example instances, rubbing with such liquids may be especially beneficial in removing film 17 after HT when the coated article is still warm therefrom (e.g., when the film 17 is from about 80-200 degrees C, more preferably from about 100-180 degrees C; although the removal of film 17 may also take place at room temperature in certain example embodiments).

After film 17 has been removed, the remaining coated article is shown at the right side of Figs. 1-2, and includes an outer layer comprising scratch resistant DLC. The aforesaid processes are advantageous in that they provide a technique for allowing a coated article including a protective DLC inclusive layer 11 to be heat treated without the DLC layer 11 burning off during such HT. In other words, it becomes possible to provide a protective DLC inclusive layer 11 on a heat treated (e.g., thermally tempered) product in a commercially acceptable manner.

Fig. 4 is a cross sectional view of a comparative, non-inventive example embodiment that is similar to Figs. 1-2, except that release layer 17a and oxygen blocking layer 17b need not be of zinc oxide. A barrier layer 6 (discussed above) may or may not be provided between the glass and the DLC in the Fig. 4 embodiment (although it is not shown in the figure).

The oxygen blocking or barrier layer 17b may be of or include a material selected from the group consisting of: zinc oxide, silicon carbide, aluminum nitride, boron oxide, aluminum oxide, aluminum oxynitride, silicon nitride, silicon oxide, silicon oxynitride, and mixtures thereof. Preferred materials for the oxygen blocking or barrier layer 17b are aluminum nitride and silicon carbide in certain example embodiments. In certain example embodiments, the layer 17b is designed to be about as hard and/or durable as glass.

The release layer 17a may be of any suitable material that dissolves or readily reacts with water, vinegar, or bleach. Release layer 17a preferably has a melting point (or dissociation temperature) above 580 or 600 degrees C in certain example embodiments. The release layer 17a may be of or include oxides, suboxides, nitrides and/or subnitrides of boron, titanium boride, magnesium, zinc, and mixtures thereof. Preferred materials for the release layer 17a in certain example embodiments are suboxides of zinc, magnesium and/or titanium boride. Note that the term "oxide" as used herein is broad enough to encompass suboxides.

In certain example embodiments, release layer 17a is more dissolvable than is layer 17b in water, vinegar, bleach and/or the like. Moreover, in certain example embodiments, oxygen barrier layer 17b is more of a barrier to oxygen and/or is harder than is release layer 17a. Exemplary coatings may produce high quality post-HT and post-release DLC, with good scratch resistance and good hard water cleanability. The release layer 17a and/or the oxygen barrier layer 17b may be deposited via sputtering, or any other suitable technique, in different example embodiments of this invention.

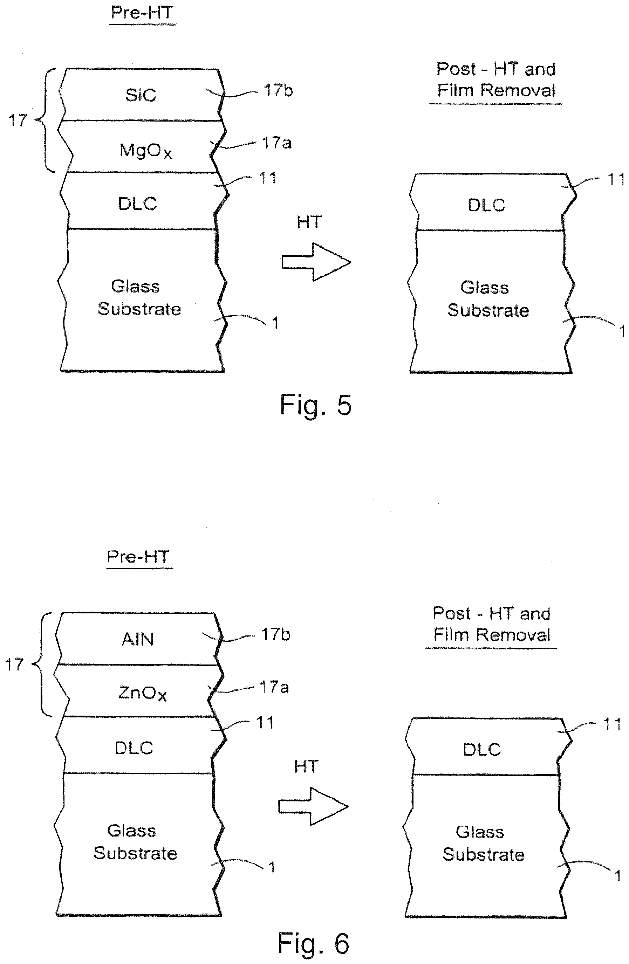

Fig. 5 shows a comparative, non-inventive example embodiment where the release layer 17a is of or includes a suboxide of magnesium (MgOₓ), and the oxygen blocking or barrier layer 17b is of or includes silicon carbide. Optionally, a barrier layer 6 may be provided between the DLC 11 and the glass substrate 1 in certain instances of this embodiment, for reducing sodium migration during or due to HT. After heat treatment or HT (e.g., tempering), the product is exposed to a mildly reactive liquid (e.g., water, vinegar, dilute ammonia and/or bleach), and the liquid penetrates through to the release layer 17a via pinholes or grain boundaries in the overlying layer(s) and causes the release layer to disband from the DLC 11. Thus, the release layer 17a and the oxygen barrier layer 17b are removed following the HT. Hot water is a particularly good release liquid for use with the materials shown in the Fig. 5 embodiment. Example thickness are as follows in this example embodiment: barrier layer 6 of silicon nitride or silicon oxynitride formed by sputtering about 12,5 nm or 15 nm (125 or 150 Ǻ) thick; DLC layer 11 about 5 nm (50 Ǻ) thick; MgOx layer 17a about 19 nm (190 Ǻ) thick, and SiC layer 17b about 28 nm (280 Ǻ) thick.

Fig. 6 shows a comparative, non-inventive example embodiment where the release layer 17a is of or includes a suboxide of zinc (ZnOₓ), and the oxygen blocking or barrier layer 17b is of or includes aluminum nitride (AlN). Optionally, a barrier layer 6 may be provided between the DLC 11 and the glass substrate 1 in certain instances of this embodiment, for reducing sodium migration during or due to HT. After heat treatment or HT (e.g., tempering), the product is exposed to a mildly reactive liquid (e.g., water, vinegar, dilute ammonia and/or bleach), and the liquid penetrates through to the release layer 17a via pinholes or grain boundaries in the overlying layer(s) and causes the release layer to disband from the DLC 11. Thus, the release layer 17a and the oxygen barrier layer 17b are removed following the HT. Vinegar is a particularly good release liquid for use with the materials shown in the Fig. 6 embodiment. Example thickness are as follows in this example embodiment: barrier layer 6 of silicon nitride about 15 nm (150 Ǻ) thick; DLC layer 11 about 5 nm (50 Ǻ) thick; ZnOx layer 17a about 50 nm (500 Ǻ) thick, and AlN layer 17b about 20 (200 Ǻ) thick.

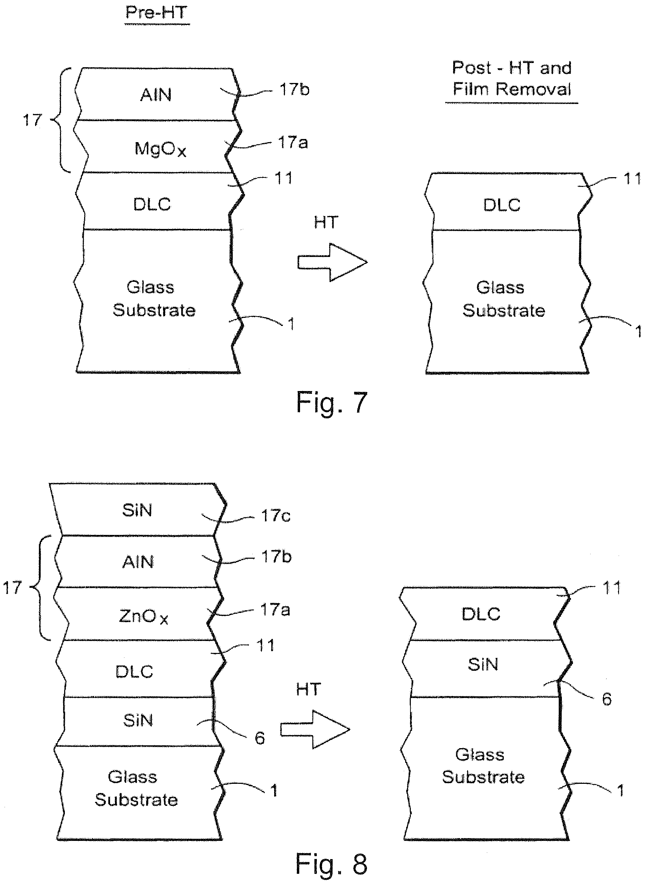

Fig. 7 shows a comparative, non-inventive example embodiment where the release layer 17a is of or includes a suboxide of Mg (MgOₓ), and the oxygen blocking or barrier layer 17b is of or includes aluminum nitride (AlN). Optionally, a barrier layer 6 may be provided between the DLC 11 and the glass substrate 1 in certain instances of this embodiment, for reducing sodium migration during or due to HT. After heat treatment or HT (e.g., tempering), the product is exposed to a mildly reactive liquid (e.g., water, vinegar, dilute ammonia and/or bleach), and the liquid penetrates through to the release layer 17a via pinholes or grain boundaries in the overlying layer(s) and causes the release layer to disband from the DLC 11. Thus, the release layer 17a and the oxygen barrier layer 17b are removed following the HT. Hot water is a particularly good release liquid for use with the materials shown in the Fig. 7 embodiment. Example thickness are as follows in this example embodiment: DLC layer 11 about 5nm (50 Ǻ) thick; MgOx layer 17a about 23 nm (230 Ǻ) thick, and AIN layer 17b about 20 nm (200 Ǻ) thick.

Fig. 8 is applicable to any of the embodiments discussed above as well. Fig. 8 shows an example embodiment where the release layer 17a is of or includes a suboxide of zinc (ZnOₓ), the oxygen blocking or barrier layer 17b is of or includes aluminum nitride (AlN), and a top coat protective layer 17c of or including silicon nitride and/or silicon oxynitride is provided. Optionally, a barrier layer 6 (e.g., of or including silicon nitride, silicon oxide, and/or silicon oxynitride) may be provided between the DLC 11 and the glass substrate 1 in certain instances of this embodiment, for reducing sodium migration during or due to HT. After heat treatment or HT (e.g., tempering), the product is exposed to a mildly reactive liquid (e.g., water, vinegar, dilute ammonia and/or bleach), and the liquid penetrates through to the release layer 17a via pinholes or grain boundaries in the overlying layer(s) and causes the release layer to disband from the DLC 11. Thus, the release layer 17a, the oxygen barrier layer 17b, and the protective layer 17c are removed following the HT. Vinegar is a particularly good release liquid for use with the materials shown in the Fig. 8 embodiment, although other liquid(s) such as water may also or instead be used for removal of sacrificial film 17. Brushing (e.g., via rotating brushes such as nylon brushes or the like) may be used to remove film 17 when wetted with water or the like in certain example instances. Example thickness are as follows in this example embodiment: barrier layer 6 of silicon nitride from about 10 to 30 nm (100-300 Å) thick (e.g., about 20 nm (200 Ǻ) thick); DLC layer 11 from about 3 to 6 nm (30-60 Å) thick (e.g., about 3 to 5 nm (30-50 Ǻ) thick); ZnOx layer 17a from about 50 to 200 nm (500-2,000 Å) thick, oxygen blocking AlN layer 17b from about 10 to 30 nm (100-300 Å) thick (e.g., about 20 nm (200 Ǻ) thick), and protective silicon nitride inclusive layer 17c from about 0 to 50 nm (0-500 Å) thick (e.g., about 20 to 30 nm (200-300 Å) thick). The silicon nitride based protective layer 17c is advantageous in that it provides improved mechanical durability of the sacrificial film 17, and prevents or reduces damage to the coated article of film during transport and handling (e.g., if the film 17 is scratched, it may not adequately protect the DLC during HT from burning off).

According to certain example embodiments of this invention, coated articles herein lose no more than about 15% of their visible transmission due to HT, more preferably no more than about 10%. Moreover, monolithic coated articles herein preferably have a visible transmission after HT of at least about 50%, more preferably of at least about 60 or 75%.

As indicated above, the substrate 1 may be soda lime silica glass. This or other glass may made using a float line, e.g., with a tin bath. As is known, a substrate of or including float glass may have two major surfaces. A first major surface of the substrate may be in contact with the tin bath during the float process, and the opposite (second) major surface may be exposed to the environment. Thus, in certain example embodiments, a substrate may have two major surfaces, often called a "tin side" and an "air side," e.g., because of the first major surface contacts the tin bath whereas the opposing major surface is exposed to the environment or air.

In certain example embodiments, one or both of the tin side and the air side of a substrate may be coated, e.g., using the coatings described herein. Furthermore, the coatings as described herein may be deposited on one or both of the major surfaces of the substrate, in different example embodiments.

Decorative glass is known. Such glass may be based on soda lime silica glass and may be, for example, SatinDeco glass or SatinDeco Elegance glass commercially available from Guardian Industries Corp. This type of glass involves "silky smooth" in appearance, is easy to clean, and is resistant to body oils penetrating the glass (thereby also making it resistant to stains and fingerprints). It provides privacy while still allowing light to shine through. The visible and performance properties may be obtained by, for example, acid etching the glass, thereby creating a micro-textured surface. It is noted that for commercially available 6 mm thick SatinDeco glass, for example, visible transmission is at least 80% from both sides, more preferably at least 85% from both sides, and in some cases 90.5% or higher for incident light on a satin-etched surface and 88.5% or higher for incident light on a non-satin-etched surface. The acid-etch treatment may be performed on one or both sides of the glass, which may be tinted or neutral in color. Glass with this sort of silky smooth appearance may be used in a variety of applications include in kitchens, bath, offices, and other settings; for creating partitions, staircases, doors, murals, and shower enclosures; in achieving desired effects for windows, roofing, and walls; etc. Commercially available SatinDeco and SatinDeco Elegance glass may have the following roughness values:

| | **Ra** | **Rz** | **Rq** | **RSm** |
|---|---|---|---|---|
| SatinDeco | 1.92 | 11.11 | 2.02 | 61 |
| SatinDeco Elegance | 0.74 | 9.53 | 1.87 | 141 |

It is noted that Walkerhas' commercially available "Satin" glass is similar to Guardian's SatinDeco Elegance product, whereas Walkerhas' commercially available "Velour" and "Opaque" glass are similar to Guardian's SatinDeco product, and that example embodiments of this invention may be used with these or other acid or otherwise etched substrates that provide the same or similar silky smooth appearance.

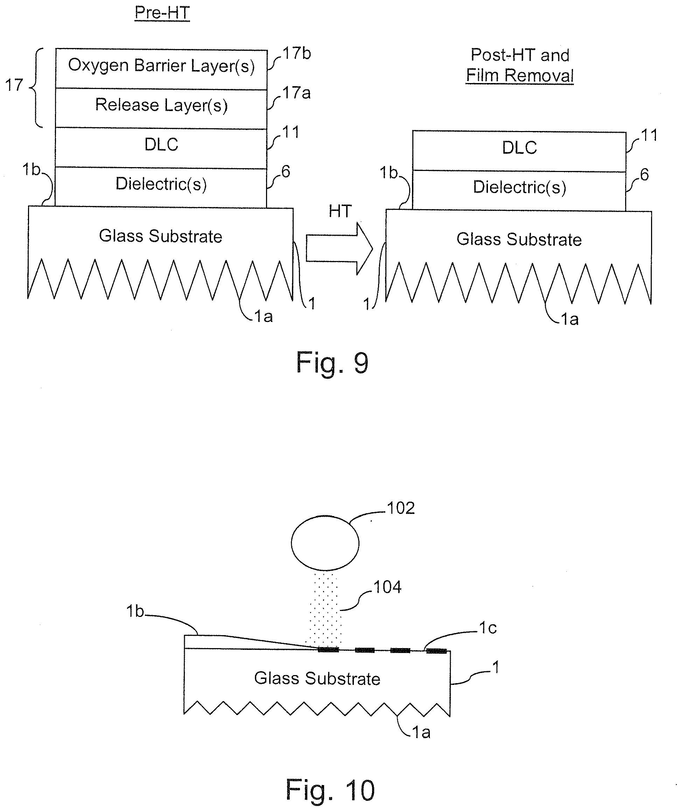

It will be appreciated that when a silky smooth appearance is desired, it may also be desirable to use the DLC-inclusive protective coatings described herein. In such cases, the air side of the glass may be acid-etched to create the desired silky appearance. The DLC-inclusive protective coating, on the other hand, may be applied to the opposing major surface or the tin side of the glass. Fig. 9 is a schematic cross sectional view of a coated article having a silky smooth appearance, prior to and following heat treatment.

The type of acid etching may be a "hard" acid etch or a "soft" acid etch. SatinDeco glass may be produced using a single pass of a hard acid etchant, whereas SatinDeco Elegance glass may be produced using a two-pass soft acid etchant. The choice of a hard or soft acid etchant may result in different surface textures of the etched surface of the glass. For example, a hard acid etchant will tend to produce sharp peeks and valleys, whereas a soft acid etchant will tend to produce more gently sloping peeks and valleys that tend to be shallower than those produced via the hard acid etchant. This oftentimes will also result in a difference in the haze that is produced, such that hard acid etchants will tend to produce glass that has more haze than a glass substrate treated with a soft acid etchant.

As shown in Fig. 9, the glass substrate 1 has an acid-etched first major surface 1a that helps to provide for the silky smooth appearance of the coated article. The sharp peeks and deep valleys shown in Fig. 9 are similar to those produced using a one-pass hard acid etchant (although other example embodiments may have sharp peeks and valleys produced via other etchants, and although still other example embodiments may have more gently rolling peeks with shallower valleys that may be produced with a two-pass soft acid etchant or via some other suitable means). The second major surface 1b supports the protective coating. For instance, prior to heat treatment, the second major surface 1b supports one or more dielectrics 6, a layer comprising DLC 11, and protective film 17 (including one or more release layers 17a and one or more oxygen barrier layers 17b). Post heat treatment and film removal, the second major surface 1b supports the one or more dielectrics 6 and the layer comprising DLC 11.

In certain comparative, non-inventive example embodiments, the first major surface 1a is the air side of the float glass substrate 1, whereas the second major surface 1b is the tin side of the float glass substrate 1. Of course, this may be reversed in different embodiments It is noted that the acid-etched surface does not also support the protective coating. This is because the protective film may interfere with at least some of the advantageous properties imparted by the acid etching and/or may not provide a good surface for subsequent deposition of the layer comprising DLC. To obtain a good balance of protective scratch resistance from the DLC along with the desired silky smooth appearance and anti-fingerprint and easy cleaning properties from the acid etching, it may be desirable to provide the DLC on the opposite surface from the acid-etched surface. Typically, the acid-etched surface is the air side of the substrate (e.g., for ease during manufacturing). Thus, as indicated above, the layer comprising DLC 11 may be provided on the tin side of the float substrate, whereas the acid etching may be performed on the air side of the float glass substrate.

Disposing the protective coating (including the layer comprising DLC) on the tin side of the glass substrate results in aesthetically displeasing amounts of haze, especially following heat treatment (e.g., heat strengthening or thermal tempering) and removal of the sacrificial release layer(s).

This increase in haze may be because tin, tin oxide, and/or other contaminants may build up on the tin side of the substrate while it is in the tin bath during the float process and/or as it is being conveyed by transport rollers (e.g., throughout the line). In some cases, this build-up of tin and/or tin oxide may be similar to a thin-film comprising tin and/or tin oxide having been disposed on a substrate. Indeed, deposits of tin and/or tin oxide may result in a continuous or discontinuous layer that contributes to haze, especially following the heat treatment. The build-up of tin and/or tin oxide is believed to be at least partially responsible for the haze, as is
the presence of contaminants from the bath and/or rollers, with the rollers and contaminants potentially causing other surface defects that result in haze post-heat treatment.

It will be appreciated that it would be desirable to reduce post-heat treatment haze in some situations.

The occurrence and/or severity of post-heat treatment haze may be reduced by "reconditioning" the tin side of the substrate prior to deposition of the layers in the protective layer stack (including, for example, the one or more optional dielectrics 6, the DLC-inclusive layer 11, and the protective film 17). For instance, the inventors have discovered that the occurrence and/or severity of post-heat treatment haze may be reduced by etching and/or milling the tin side of the substrate with an ion beam. It is believed that the ion beam etching and/or milling may help to remove at least part of a tin, tin oxide, and/or other contaminant build-up on that surface, thus removing a potential cause for the haze. Ion beam etching may be performed using any suitable ions. For instance, suitably "pure" Ar or N2 etching of the tin side of a substrate has surprisingly and effectively been found to reduce the post-heat treatment haze when a protective coating is applied to the air side of the substrate. It is hard to accurately measure the coating haze on a final product because the acid-etch acts as a "camouflage." However, an index fluid may be used to "flatten" the acid-etched surface. When this was done, the haze for non-ion beam treated glass was above 1%, whereas the haze for ion beam treated glass was less than 0.5%.

As alluded to above, in certain example embodiments, the tin side of glass substrate 1 may be ion beam milled before layers 6, 11, and 17a and 17b are disposed thereon. The ion beam milling of the glass substrate may remove or reduce the tin, tin oxide, and/or other contaminant build-up on the glass, surface thereby resulting in an end product with a reduced amount of haze upon heat treatment. For example, any of the example techniques of ion beam milling described in U.S. Patent No. 6,368,664 may be used to ion beam mill the glass substrate 1 in this regard. Of course, other techniques also are possible. For instance, ion beams, ion sources, ion beam treatments, and the like are disclosed, for example, U.S. Patent Nos. 6,808,606; 7,030,390; 7,183,559; 7,198,699; 7,229,533; 7,311,975; 7,405,411; 7,488,951; and 7,563,347, and U.S. Publication Nos. 2005/0082493; 2008/0017112; 2008/0199702. Ion beam etching or milling using these or other techniques advantageously may help reduce haze after heat treatment.

Fig. 10 is a schematic view of an ion beam being used to "recondition" a substrate having a silky smooth appearance. Ion beam source 102 provides ions 104 that contact the tin side surface 1b of substrate 1. The force with which the ions contact the tin side surface 1b causes at least a portion of the substrate 1 and/or contaminants thereon to be milled or etched off. This leaves substrate 1 with ion-milled surface 1c as a first major surface on the tin side. The acid-etched surface 1b opposite the ion beam milled or etched surface 1c remains intact.

In certain example embodiments, ion beam milling or etching may be used to remove at least about 2 Å of glass from the substrate, more preferably at least about 5 Å, and possibly at least about 10 Å. Thereafter, one or more thin-film layers in the protective coating may be disposed thereon. For instance, the one or more optional dielectrics 6 and/or the DLC-inclusive layer 11 may be deposited using sputtering (e.g., using planar and/or magnetron targets) or via ion-beam assisted deposition (IBAD) in different embodiments. Stack configurations may be produced by one-pass in-line deposition in a
suitably configured system, or in any other suitable manner in different example embodiments.

In some cases, the Satin Deco related features may be provided on the air side of a glass substrate. Thus, in certain examples, any further coatings will be applied on the tin side as discussed above. In some cases, therefore, the DLC-inclusive coating may be applied on the tin side of a glass substrate. In other example embodiments, however, the DLC-inclusive coating described herein may be applied on the air side of a glass substrate.

In any of the embodiments discussed above (e.g., see Figs. 1-9 above), it is also possible to provide an optional scratch resistant layer (e.g., of or including SiC or DLC) over the layer 17b.

In certain other example embodiments, it may be advantageous to provide coatings as described herein on one major surface of a glass substrate, while treating another major surface in a different manner.

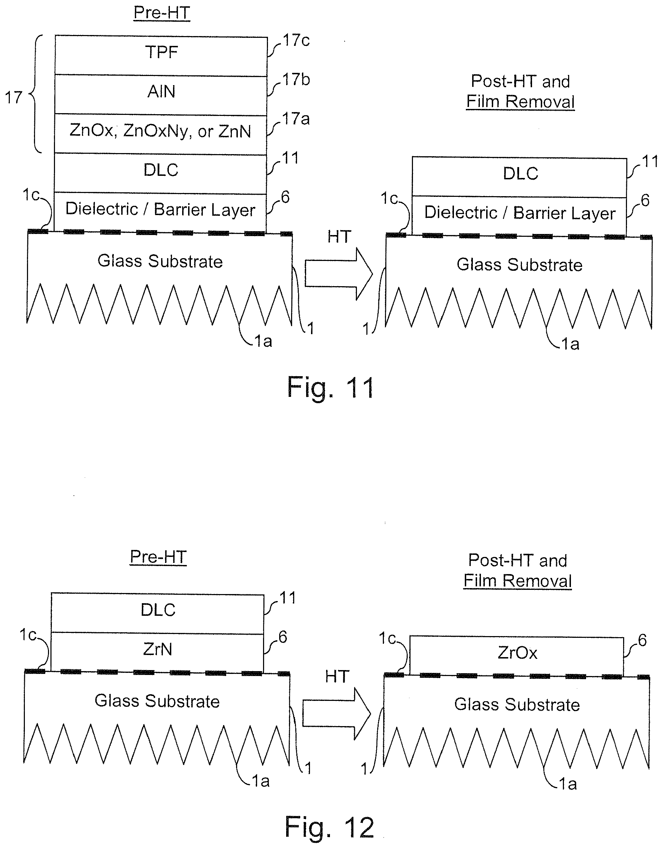

Fig. 11 is a schematic cross sectional view of a coated article having a silky smooth appearance and low post-heat treatment haze. A glass substrate 1, according to an comparative, non-inventive example, is shown in Fig. 11. The glass substrate 1 includes an acid-etched air side surface 1a, which creates a silky smooth matte like appearance that provides privacy while at the same time also allowing light to pass through the substrate. The tin side 1c of the substrate 1 has been ion-beam etched or milled. The ion-beam etched or milled surface ic, prior to heat treatment, supports one or more optional dielectric or barrier layers 6, e.g., of or including silicon oxide, silicon nitride, silicon oxynitride, zirconium, tin oxide, titanium oxide, or multiple layers for optical purposes (e.g., high/low index layer stacks, high/low/medium index layer stacks, etc.). The one or more optional dielectric or barrier layers. A layer comprising DLC 11 is provided on the one or more optional dielectric or barrier layers 6, and a zinc-inclusive release layer 17a is provided over the layer comprising DLC 11. The zinc-inclusive release layer 17a may be of or include zinc oxide, zinc oxynitride, or zinc nitride in different embodiments of this invention. A layer comprising aluminum nitride 17b may be provided over the zinc-inclusive release layer 17a. Optionally, in certain example embodiments, a temporary protective film (TPF) 17c may be disposed as an outermost layer. To better protect coated glass sheets in various processing stages, temporary protective coatings have been developed. See, for example, U.S. Publication Nos. 2010/0178850; 2010/0024953; 2009/0068350; 2009/0044897; 2008/0302462; and 2005/0210921. The temporary protective coatings may be applied in solid or liquid forms and are designed such that they can be easily removed, typically by peeling.

The TPF 17c may be removed by peeling or via abrasive means prior to heat treatment in certain example embodiments. However, in certain other example embodiments, the TPF 17c may be removed by virtue of the high temperatures associated with the heat treatment. In any event, the zinc-inclusive release layer 17a and the layer comprising aluminum nitride 17b may also be removed following heat treatment. A zirconium-inclusive layer may be used as the one or more optional dielectric or barrier layers 6 in certain example embodiments, and such a layer may change upon heat treatment. For instance, a ZrN-inclusive layer may become a ZrOx inclusive layer upon heat treatment. In certain example embodiments, the layer may consist essentially of ZrN prior to heat treatment and may consist essentially of ZrO after heat treatment. It will be appreciated that the conversion of ZrN to ZrOx may be full or partial. In certain example embodiments, the layer may include more N than O prior to heat treatment, and may include more O than N after heat treatment. After heat treatment, the coated article exhibits good haze properties. The good haze observable in the a coated article as shown and described herein, e.g., in connection with the Fig. 11 example embodiment, provides superior haze values as compared to a articles that lack the ion-beam milled or treated surface 1c of the tin side of the substrate.

It is noted that the textured surface 1a of substrate 1 may have a prismatic surface, a matte finish surface, or the like in different, example embodiments of this invention. The textured surface 1a of substrate 1 may have peaks and valleys defined therein, with inclined portions interconnecting the peaks and valleys. This surface of substrate 1 may be etched (e.g., via HF etching using HF etchant or the like) and/or patterned via rollers or the like during glass manufacture in order to form a textured (and/or patterned) surface 1a. In some cases, the etching may be performed using a single or multi-agent etchant, e.g., of or including a weak acid. For example, HCl, H₂SO₄, formic acid (HCOOH), acetic acid (CH₃COOH), trichloroacetic acid (CCl₃COOH), hydrofluoric acid (HF), hydrocyanic acid (HCN), hydrogen sulfide (H2S), and the like, may be used.

Fig. 12 is a schematic cross sectional view of another coated article having a silky smooth appearance and low post-heat treatment haze. Fig. 12 is similar to Fig. 11 in that the air side 1a of the substrate 1 has been etched with a strong acid etchant to produce the sharp peaks and deep valleys shown schematically therein. The ion-beam "reconditioned" tin side 1c of the substrate 1 also supports a layer comprising zirconium nitride 6 and a DLC-inclusive layer 11 thereon. However, rather than providing a separate sacrificial protective film 17 (e.g., as in the Fig. 11 example embodiment), the DLC-inclusive layer 11 itself is used as the sacrificial or protective layer. Thus, as shown in Fig. 12, the DLC-inclusive layer 11 is removed as a result of the heat treatment and the layer comprising ZrN 6 is converted into a layer comprising ZrOx 6 as a result of the heat treatment.

It is noted that a TPF material similar to that described above in connection with Fig. 11 may be provided in connection with the Fig. 12 embodiment. As above, the TPF material may be removed (e.g., via peeling, exposure to a removal liquid, and/or abrasive means) prior to heat treatment, or the TPF material may be removed as a result of the heat treatment.

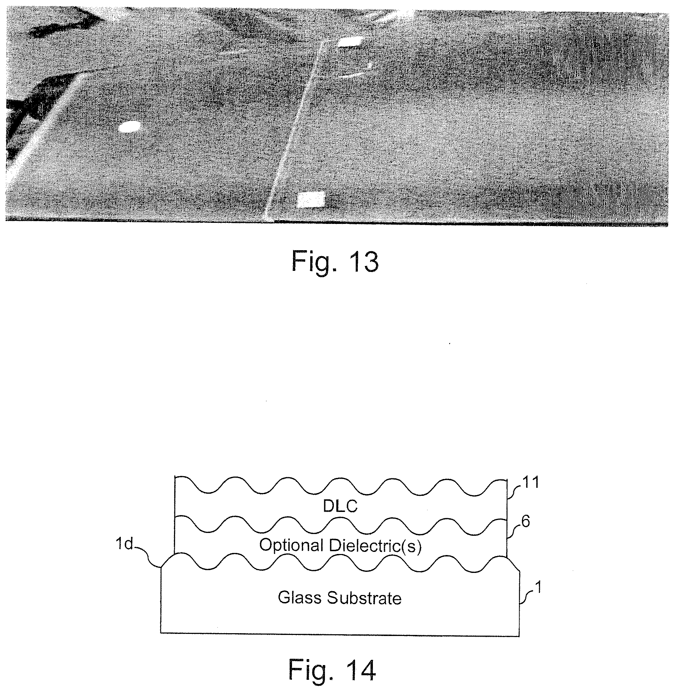

Fig. 13 compares coated articles that have been ion beam etched (left) with coated articles that have not been ion beam etched (right). Both the left and right images share the layer stack illustrated in Fig. 12. However, the left-side example has an ion-beam textured tin side major surface ic, whereas the right-side example does not. As can be seen in Fig. 13, the ion beam-milled substrate on the left had less post-tempering haze than the non-milled substrate on the right. Thus, it is clear that ion-beam etching or milling the tin side of the substrate results in a structural difference in the coated article glass that is observable in the form of a lack of post-heat treatment haze compared to a situation in which no ion-beam etching or milling is carried out on the tin side of the substrate.

As explained above, by first ion beam milling the tin side of the substrate before disposing a protective coating thereon, the haze of the final product (e.g., after processing and/or heat treatments) may be reduced. This is advantageous because haze can be kept low while still providing for a scratch resistant article that also has a silky smooth matte like appearance, providing privacy with light transmission.

In certain example embodiments, it is possible to acid etch one or both sides with a soft or hard etchant. As also indicated above, it is possible to dispose protective coatings of or comprising DLC on one or both surfaces of a glass substrate. That said, it surprisingly and unexpectedly has been found that disposing a layer comprising DLC to a soft-etched glass substrate on the acid etched side greatly improves scratch resistance. Part of the reason that this is surprising and unexpected is that disposing a layer comprising DLC on a hard etched side of a glass substrate does not result in a significant improvement. It is believed that both the surface topology of the underlying substrate and the
hard coating disposed thereon affect scratch resistance. The smoother peaks of the soft-etched glass thus help provide better coating coverage as well as overall scratch resistance.

In certain example embodiments, an optional barrier or diffusion layer may be disposed on the etched surface. As alluded to above, such an optional barrier or diffusion layer may help to reduce the likelihood of sodium migration from the glass substrate into the layer comprising DLC. The optional barrier or diffusion layer also may help to adhere the layer comprising DLC to the substrate and/or serve index matching features.

Fig. 14 is a schematic cross sectional view of a coated article having a silky smooth appearance and improved scratch resistance. As shown in Fig. 14, a glass substrate 1 has a soft-etched surface id. This soft-etched surface id may be the air side of the substrate 1 in certain example embodiments, although the tin-side may additionally or alternatively be etched in different example embodiments. The soft-etched surface id supports one or more optional dielectrics 6, as well as the protective layer comprising DLC 11. When the coated article of Fig. 14 is to be used in its annealed state, no protective overcoat layers are necessary. However, in certain example embodiments, a TPF may be applied over the layer comprising DLC 11 in certain other example embodiments.

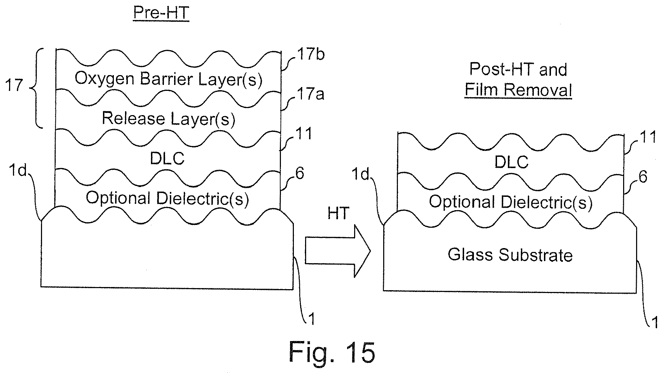

Fig. 15 is similar to Fig. 14, except that Fig. 15 is a schematic cross sectional view of a heat treatable coated article having a silky smooth appearance and improved scratch resistance according to certain example embodiments of this invention. The removable protective overcoat film 17 may include, for example, the release layer(s) 17a and oxygen barrier layer(s) 17b as discussed above. For instance, in certain example embodiments, the release layer 17a may include a zinc-inclusive layer (e.g., zinc oxide, zinc nitride, or zinc oxynitride), and the oxygen barrier layer 17b may include aluminum (e.g., aluminum oxide, aluminum nitride, or aluminum oxynitride).

In certain example embodiments, the optional dielectric layer 6 may help serve as a barrier (e.g., for migration blocking purposes), while also improving the optical and/or adhesion characteristics of the coated article. A silicon-inclusive layer or other high index material that is neutral in color (or imparts neutrality in color to the annealed or heat treated articles) may be used. Silicon nitride, silicon oxide, silicon oxynitride, halfnium oxide, and/or other materials may be used for the optional dielectric layer 6.

In the Fig. 15 embodiment, as in the embodiments described above, the optional dielectric layer 6 may be, for example, 1-500 nm thick, more preferably 5-300 nm thick, and still more preferably 15-150 nm thick. In the Fig. 15 embodiment, as in the embodiments described above, the DLC-inclusive layer 11 may be, for example, 1-25 nm thick, more preferably 3-10 nm thick, and sometimes about 5 nm thick. In the Fig. 15 embodiment, as in the embodiments described above, the release layer 17a may be, for example, 75-500 nm thick, more preferably 100-300 nm thick, and sometimes about 150 nm thick. In the Fig. 15 embodiment, as in the embodiments described above, the oxygen barrier layer 17b may be, for example, 20-100 nm thick, more preferably 35-75 nm thick, and sometimes about 50 nm thick.

Similar to the above, a TPF material may be applied and removed prior to or as a result of the heat treatment. Also similar to the above, the protective film 17 may be removed by virtue of the heat treatment, e.g., such that at least a portion of the DLC-inclusive layer 11 is exposed as an outermost layer of the coated article after heat treatment.

It is noted that the steps described herein may be performed by one or more different parties. For example, the party providing a matte finished glass substrate may or may not be the same party as the party supplying the DLC-inclusive protective coating, and/or the party performing the heat treatment. In certain example embodiments, one party may acid etch a substrate, a second party may provide the DLC-inclusive protective coating, and a third party may heat treat this intermediate party. Other combinations of actors also are contemplated herein.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the scope of the appended claims.

## Claims

1. A method of making a coated article, the method comprising:
providing a glass substrate including first and second major surfaces, the first major surface being acid etched with a soft acid etchant, and the second major surface being opposite the first major surface;
disposing a layer comprising diamond-like carbon (DLC) on the first major surface; and
disposing a protective film on the glass substrate over at least the layer comprising DLC, the protective film including at least release and oxygen barrier layers, the release and oxygen barrier layers being different materials and/or having different stoichiometries compared to one another, wherein
the glass substrate with the layer comprising DLC and the protective film thereon is heat treatable at a temperature sufficient for thermal tempering, heat strengthening, and/or heat bending so as to cause the removal of the protective film without causing significant burnoff of the layer comprising DLC.

2. The method of claim 1, further comprising disposing a dielectric or barrier layer on the first major surface of the glass substrate, the dielectric or barrier layer being located between the glass substrate and the layer comprising DLC, wherein the dielectric or barrier layer preferably comprises silicon and more preferably silicon nitride.

3. The method of any preceding claim, wherein the release layer comprises zinc oxide and/or the oxygen barrier layer comprises aluminum nitride.

4. The method of any preceding claim, further comprising applying a temporary protective sheet in liquid or solid form over the protective film, wherein the method preferably further comprises removing the temporary protective sheet prior to said heat treating.

5. The method of any preceding claim, further comprising heat treating the glass substrate with the layer comprising DLC and the protective film thereon.

6. The method of any preceding claim, wherein at least part of the layer comprising DLC is exposed so as to be an outermost layer of the coated article as a result of said heat treatment.

7. The method of any preceding claim, wherein the oxygen barrier layer comprises aluminum nitride and the release layer comprises zinc oxynitride.

8. The method of any preceding claim, wherein prior to heat treatment the dielectric or barrier layer is 15 - 150 nm thick, the DLC-inclusive layer is 3 - 10 nm thick, the release layer is 100 - 300 nm thick, and the oxygen barrier layer is 35 - 75 nm thick.

9. A method of claim 1 further comprising
heat treating the glass substrate with the layer comprising DLC and the protective film thereon, so as to remove the release and oxygen barrier layers and cause at least a portion of the layer comprising DLC to be exposed as an outermost layer of the heat treated coated article.

10. The method of claim 9, wherein a dielectric or barrier layer is disposed on the first major surface of the glass substrate between the glass substrate and the layer comprising DLC.

11. The method of claim 10, wherein the dielectric or barrier layer comprises an oxide and/or nitride of silicon.

12. The method of any of claims 9 - 11, wherein the release layer comprises zinc oxide and/or zinc oxynitride, and wherein the oxygen barrier layer comprises aluminum nitride.

13. The method of any of claims 9 - 12, wherein the release layer consists essentially of zinc oxide and/or zinc oxynitride, and the oxygen barrier layer consists essentially of aluminum nitride.

## Patentansprüche

1. Verfahren zum Herstellen eines beschichteten Gegenstands, wobei das Verfahren Folgendes umfasst:
Bereitstellen eines Glassubstrats, das eine erste und eine zweite Hauptoberfläche aufweist, wobei die erste Hauptoberfläche mit einem milden Säureätzmittel säuregeätzt wird und die zweite Hauptoberfläche der ersten Hauptoberfläche gegenüberliegt;
Anordnen einer diamantähnlichen Kohlenstoff (DLC) umfassenden Schicht auf der ersten Hauptoberfläche; und
Anordnen eines Schutzfilms auf dem Glassubstrat über zumindest der DLC umfassenden Schicht, wobei der Schutzfilm zumindest eine Trenn- und eine Sauerstoffbarriereschicht aufweist, wobei die Trenn- und die Sauerstoffbarriereschicht unterschiedliche Materialien sind und/oder im Vergleich miteinander unterschiedliche Stöchiometrien aufweisen, wobei
das Glassubstrat mit der DLC umfassenden Schicht und dem Schutzfilm darauf bei einer Temperatur wärmebehandelbar ist, die zum thermischen Vorspannen, Wärmehärten und/oder Wärmebiegen ausreichend ist, um das Entfernen des Schutzfilms zu bewirken, ohne einen signifikanten Abbrand der DLC umfassenden Schicht zu bewirken.

2. Verfahren nach Anspruch 1, ferner umfassend Anordnen einer dielektrischen oder Barriereschicht auf der ersten Hauptoberfläche des Glassubstrats, wobei sich die dielektrische oder Barriereschicht zwischen dem Glassubstrat und der DLC umfassenden Schicht befindet, wobei die dielektrische oder Barriereschicht bevorzugt Silicium und besonders bevorzugt Siliciumnitrid umfasst.

3. Verfahren nach einem der vorhergehenden Ansprüche, wobei die Trennschicht Zinkoxid umfasst und/oder die Sauerstoffbarriereschicht Aluminiumnitrid umfasst.

4. Verfahren nach einem der vorhergehenden Ansprüche, ferner umfassend Aufbringen einer temporären Schutzlage in flüssiger oder fester Form über dem Schutzfilm, wobei das Verfahren bevorzugt ferner Entfernen der temporären Schutzlage vor der Wärmebehandlung umfasst.

5. Verfahren nach einem der vorhergehenden Ansprüche, ferner umfassend Wärmebehandeln des Glassubstrats mit der DLC umfassenden Schicht und dem Schutzfilm darauf.

6. Verfahren nach einem der vorhergehenden Ansprüche, wobei zumindest ein Teil der DLC umfassenden Schicht freigelegt wird, um infolge der Wärmebehandlung eine äußerste Schicht des beschichteten Gegenstands zu sein.

7. Verfahren nach einem der vorhergehenden Ansprüche, wobei die Sauerstoffbarriereschicht Aluminiumnitrid umfasst und die Trennschicht Zinkoxinitrid umfasst.

8. Verfahren nach einem der vorhergehenden Ansprüche, wobei vor der Wärmebehandlung die dielektrische oder Barriereschicht 15-150 nm dick ist, die DLC enthaltende Schicht 3-10 nm dick ist, die Trennschicht 100-300 nm dick ist und die Sauerstoffbarriereschicht 35-75 nm dick ist.

9. Verfahren nach Anspruch 1, ferner umfassend
Wärmebehandeln des Glassubstrats mit der DLC umfassenden Schicht und dem Schutzfilm darauf, um die Trenn- und die Sauerstoffbarriereschicht zu entfernen und zu bewirken, dass zumindest ein Teil der DLC umfassenden Schicht als äußerste Schicht des wärmebehandelten beschichteten Gegenstands freigelegt wird.

10. Verfahren nach Anspruch 9, wobei eine dielektrische oder Barriereschicht auf der ersten Hauptoberfläche des Glassubstrats zwischen dem Glassubstrat und der DLC umfassenden Schicht angeordnet wird.

11. Verfahren nach Anspruch 10, wobei die dielektrische oder Barriereschicht ein Oxid und/oder Nitrid von Silicium umfasst.

12. Verfahren nach einem der Ansprüche 9-11, wobei die Trennschicht Zinkoxid und/oder Zinkoxinitrid umfasst und wobei die Sauerstoffbarriereschicht Aluminiumnitrid umfasst.

13. Verfahren nach einem der Ansprüche 9-12, wobei die Trennschicht im Wesentlichen aus Zinkoxid und/oder Zinkoxinitrid besteht und die Sauerstoffbarriereschicht im Wesentlichen aus Aluminiumnitrid besteht.

## Revendications

1. Procédé de fabrication d'un article revêtu, le procédé comprenant :
la fourniture d'un substrat en verre incluant des première et deuxième surfaces principales, la première surface principale faisant l'objet d'une attaque chimique à l'acide avec un agent d'attaque chimique doux, et la deuxième surface principale étant opposée à la première surface principale ;
la mise en place d'une couche comprenant du carbone de type diamant (DLC) sur la première surface principale ; et
la mise en place d'un film de protection sur le substrat en verre par-dessus au moins la couche comprenant le DLC, le film de protection incluant au moins des couches antiadhésive et barrière à l'oxygène, les couches antiadhésive et barrière à l'oxygène étant des matériaux différents et/ou ayant des stoechiométries différentes l'une par rapport à l'autre, dans lequel
le substrat en verre avec la couche comprenant le DLC et le film de protection sur celle-ci peut être traité à la chaleur à une température suffisante pour une trempe thermique, un renforcement à la chaleur, et/ou une flexion à la chaleur afin d'amener le retrait du film de protection sans provoquer de brûlage significatif de la couche comprenant le DLC.

2. Procédé selon la revendication 1, comprenant en outre la mise en place d'une couche diélectrique ou barrière sur la première surface principale du substrat en verre, la couche diélectrique ou barrière étant située entre le substrat en verre et la couche comprenant le DLC, dans lequel la couche diélectrique ou barrière comprend de préférence du silicium et plus préférablement du nitrure de silicium.

3. Procédé selon l'une quelconque des revendications précédentes, dans lequel la couche antiadhésive comprend de l'oxyde de zinc et/ou la couche barrière à l'oxygène comprend du nitrure d'aluminium.

4. Procédé selon l'une quelconque des revendications précédentes, comprenant en outre l'application d'une feuille de protection temporaire sous forme liquide ou solide par-dessus le film de protection, dans lequel le procédé comprend de préférence en outre le retrait de la feuille de protection temporaire avant ledit traitement à la chaleur.

5. Procédé selon l'une quelconque des revendications précédentes, comprenant en outre le traitement à la chaleur du substrat en verre avec la couche comprenant le DLC et le film de protection sur celui-ci.

6. Procédé selon l'une quelconque des revendications précédentes, dans lequel au moins une partie de la couche comprenant le DLC est exposée de façon à être une couche externe de l'article revêtu en conséquence dudit traitement à la chaleur.

7. Procédé selon l'une quelconque des revendications précédentes, dans lequel la couche barrière à l'oxygène comprend du nitrure d'aluminium et la couche antiadhésive comprend de l'oxynitrure de zinc.

8. Procédé selon l'une quelconque des revendications précédentes, dans lequel avant traitement à la chaleur la couche diélectrique ou barrière a une épaisseur de 15 à 150 nm, la couche incluant le DLC a une épaisseur de 3 à 10 nm, la couche antiadhésive a une épaisseur de 100 à 300 nm, et la couche barrière à l'oxygène a une épaisseur de 35 à 75 nm.

9. Procédé selon la revendication 1 comprenant en outre
le traitement à la chaleur du substrat en verre avec la couche comprenant le DLC et le film de protection sur celui-ci, de manière à retirer les couches antiadhésive et barrière à l'oxygène et amener au moins une partie de la couche comprenant le DLC à être exposée en tant que couche externe de l'article revêtu traité à la chaleur.

10. Procédé selon la revendication 9, dans lequel une couche diélectrique ou barrière est disposée sur la première surface principale du substrat en verre entre le substrat en verre et la couche comprenant le DLC.

11. Procédé selon la revendication 10, dans lequel la couche diélectrique ou barrière comprend un oxyde et/ou nitrure de silicium.

12. Procédé selon l'une quelconque des revendications 9 à 11, dans lequel la couche antiadhésive comprend de l'oxyde de zinc et/ou de l'oxynitrure de zinc, et dans lequel la couche barrière à l'oxygène comprend du nitrure d'aluminium.

13. Procédé selon l'une quelconque des revendications 9 à 12, dans lequel la couche antiadhésive est constituée sensiblement d'oxyde de zinc et/ou d'oxynitrure de zinc, et la couche barrière à l'oxygène est constituée sensiblement de nitrure d'aluminium.
